# EUROPEAN PATENT SPECIFICATION

(11) **EP 0 391 477 B1**
(45) Date of publication and mention of the grant of the patent: **24.11.1993**
(21) Application number: 90200768.1
(22) Date of filing: 30.03.1990
(51) Int. Cl.: C09J 103/02

(54) **A process for preparing an adhesive for corrugated cardboard and a device for carrying out said process**
Verfahren zur Herstellung eines Klebstoffs für Wellpappe und Einrichtung zur Durchführung dieses Verfahrens
Procédé pour la fabrication d'une colle pour carton ondulé et dispositif de mise en oeuvre dudit procédé

(30) Priority: 03.04.1989 NL 8900816
(43) Date of publication of application: 10.10.1990
(73) Proprietor: v.d. Hulst, Remmelt Arnold, NL-5553 CS Valkenswaard (NL)
(72) Inventor: v.d. Hulst, Remmelt Arnold, NL-5553 CS Valkenswaard (NL)
(74) Representative: Van kan, Johan Joseph Hubert, Ir.

(56) References cited:
- EP-A- 0 096 935
- DD-A- 228 818
- FR-A- 799 035
- FR-A- 2 283 937
- PATENT ABSTRACTS OF JAPAN, vol. 5, no. 106 (C-62)[778], 10th July 1981; & JP-A-56 047 466
- CHEMICAL ABSTRACTS, vol. 92, no. 4, January 1980, page 140, abstract no. 24729v, Columbus, Ohio, US; & JP-A-79 102 329

## Description

The invention relates to a process for preparing an adhesive for corrugated cardboard, which preparation is carried out in two steps, by preparing a carrier based on water, starch and lye in the first step, whereby the quantity of starch in the first step is less than the quantity of starch in the second step, and whereby a second mixture is added to the carrier in the second step, said second mixture consisting of the remaining quantity of starch, water and borax.

Such a process is known from European Patent Application 51,833. Said Patent Application also describes a device for continuously preparing an adhesive from starch, in which device in particular the mixing vessel in which the reaction is carried out is important. The reactor used thereby is divided by partitions in a succession of cells which are in communication with one another, and the stirrers are eccentrically placed in each cell. At least one cell is thereby provided with a baffle plate. With this device a good quality adhesive can be continuously obtained, but the device used is complicated and costly. The process for preparing an adhesive such as carried out according to European Patent Application 51,833 is based on the Steinhall adhesive process, which is generally known in the corrugated cardboard industry. The adhesive prepared according to said process is mostly used for producing corrugated cardboard, therefore. According to the Steinhall process a mixing vessel is used, to which the starting substances such as starch, lye and borax are added. In the mixing vessel there is placed a stirrer, so that the starting substances and the reacting mixture are subjected to shearing forces. The preparation of the adhesive thereby takes place in two stages, viz. the preparation of the primary carrier, for which purpose starch, water and caustic soda are mixed, said carrier having the function of keeping the secondary added starch in suspension. To this end water is introduced into the mixing vessel, to which starch is added and brought to a certain temperature. Then caustic soda is added to the suspension and said raw materials are stirred for about 20 minutes, so that the mixture is subjected to shearing forces. The result is a reduction in the viscosity of the mixture. A good final product must have a stable viscosity, which can be achieved in that the shearing forces to be exerted are so high that after mixing the starting substances the linear viscosity range is reached. This is difficult or practically impossible to achieve with the Steinhall process. After the primary mixture has been stirred for about 20 minutes secondary water and starch are added. The principal function of said secondary water is to determine the content of dry matter of the adhesive. This is also determined by the secondary added starch, which also influences the drying rate and the adhesiveness. After the secondary starch has been added borax is added, resulting in a sudden increase in the viscosity. Said sudded increase in the viscosity is caused by the reaction between borax and the starch. After some time, usually also after 20 minutes, an equilibrium is reached between the viscosity-increasing influence of borax and the viscosity-decreasing effect of stirring. Borax is solved thereby and the viscosity of the adhesive may decrease again. Stirring is continued until a stable viscosity is reached. A few disadvantages of said widely used Steinhall process are that relatively great differences occur in the viscosity of the final product and it is difficult to obtain certain desired adhesive compounds for different sorts of paper.

This known, widely used Steinhall process has been improved by using equipment such as described in the above European Patent Application 51,833, but now the object is to achieve a device and process which brings about an improvement compared to the Steinhall process, whereby it is not necessary to use costly equipment such as described in said European Patent Application 51,833.

From DD-A 228 818 a process is known for the preparation of an adhesive on basis of starch, but according to this reference the starting materials being water, borax, sodium hydroxide and starch have been mixed in a first mixer and then the obtained mixture has been supplied to a second container. Contrary to this, the process of the invention has been carried out in two mixing steps under specific conditions and by preparing at first a carrier, so that it is possible to have a better regulation of the properties of the adhesive to be obtained finally.

This has become possible by using a process according to the invention and said process is characterized in that it is carried out batchwise, whereby, at a temperature lower than 40 °C, in the first step the reaction mixture is added to a first relatively large mixing vessel provided with a stirrer, is led from the first mixing vessel to a second, smaller vessel in which the reaction mixture is subjected to a higher shearing stress than in the first mixing vessel, is then recirculated to the first mixing vessel and, after a predetermined viscosity of the carrier having a concentration of starch lower than 15%, calculated in relation to the weight of water plus starch has been reached, the second mixture is added to the carrier and mixed with said carrier to a homogeneous mixture, whereby the starch granules added in the second step substantially do not gelatinize and, after mixing to a homogeneous mixture, the corrugated cardboard adhesive is discharged. More in particular the quantity of starch , is 9 - 11 per cent by weight, calculated to the sum of water plus starch in the carrier. In the end product of the adhesive the concentration of starch is 15-25 weight % calculated on basis of the adhesive.

Further experiments have shown that with the process according to the invention it is possible to prepare a carrier having a desired viscosity of 4000 - 6000 m.Pa.s within 5 minutes, whilst without using the second mixing vessel a viscosity of about 9000 m.Pa.s is reached after 5 minutes.

A device for preparing an adhesive which is used for producing paper bags is known from European Patent Application 96,935, and in said process a device is used whose principal components are a relatively large mixing vessel which is connected, by means of a pump, with a relatively small mixing vessel, so that also a recirculation between the large and the small mixing vessel is possible. By means of said device however quite a different sort of adhesive is prepared, the process taking place in one single step, and the starch being disintegrated to swollen granule fragments at a relatively high temperature, preferably above 60 °C. Said swelling thereby only takes place under the influence of the heated water, and not by adding lye, nor is a carrier prepared in a first step, such as takes place according to the invention. In that known adhesive the starch concentration is 11-12 wt.% as indicated in the examples.

According to the invention the process is therefore carried out in a device consisting of a mixing vessel having a stirrer, said mixing vessel being provided with supply lines for adding the starting substances, starch, lye, borax and water, and a discharge line for discharging an adhesive product, whereby the mixing vessel is provided with a recirculation line, in which there is accommodated a second, comparatively smaller vessel provided with means for applying a shearing stress which is higher than the shearing stress applied in the first mixing vessel. In the second mixing vessel especially the shearing forces exerted on the reaction mixture are important and it will be obvious to a person skilled in the art, in what manner this can take place in the second vessel.

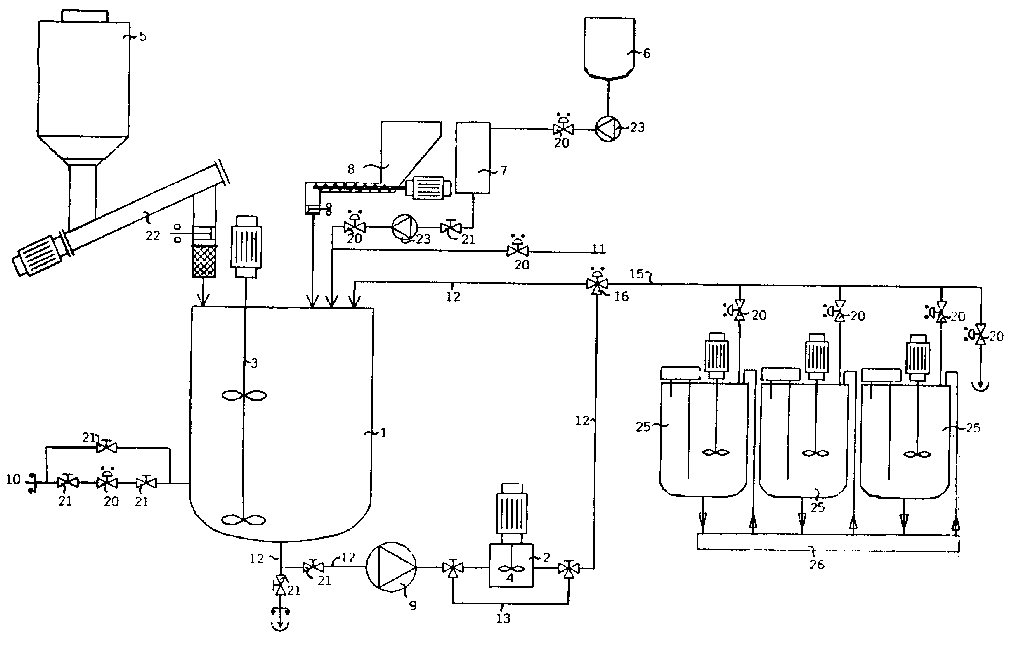

The invention will be further explained with reference to the following description, wherein reference is made to the drawing which diagrammatically illustrates an arrangement of the device such as is preferably used according to the invention.

The Figure illustrates the comparatively large mixing vessel 1 provided with stirrer 3, and the comparatively small mixing vessel 2 provided with stirrer 4. Said two vessels 1 and 2 comprise, together with the recirculation system, the reactor in which the preparation of adhesive takes place by starting from the starting substances starch, lye, borax and water, which are supplied to the mixing vessel 1. Starch is supplied from the container 5, which container is provided with a metering system 22. Lye, in particular caustic soda, is supplied from the container 6 by means of the pump 23 and a metering valve 20. In the drawing the pumps are indicated as 23, the metering valves as 20 and the valves as 21. The aqueous solution of the lye is supplied from the container 6, via the buffer vessel 7, to the mixing vessel 1. Water can be supplied via the line 11. The borax is supplied to the mixing vessel from the container 8.

The mixing vessel 1 can be heated by supplying steam, which can be supplied via the line 10 and the valves 21 and the regulating valve 20. The temperature is kept at 20 - 40 °C during the reaction. The reaction mixture which is present in the mixing vessel, whereby the various components are added while the mixture is being stirred, is supplied to the mixing vessel 2 via the recirculation line 12, said recirculation taking place by means of the pump 9. In the mixing vessel 2 the reaction mixture is stirred with a higher rotational speed than in the mixing vessel 1, so that larger shearing forces are exerted on the reaction mixture and thus a faster adjustment of the desired viscosity is obtained. It is possible that a part of the reaction mixture is pumped via the line 13 without said part coming in the mixing vessel 2. This is advantageous when the stirring speed in the mixing vessel 2 is relatively high, and it is still desirable to maintain the stirring speed for a part of the mixture.

As soon as the desired homogenity of the adhesive as a final product is achieved the valve 16 can be reversed, so that the desired final product is discharged to the vessels 25 via the line 15, and from said storage vessels 25 the adhesive can be discharged via the distribution system 26.

In the final product in particular the stability of the adhesive (viscosity) and the adhesive quality are important, and said properties are determined by three parameters, viz. the dynamic viscosity, the flow viscosity and the attack, in terms of percentage, of the starch.

The experiments that have been carried out have shown that with the process and device according to the invention a final product can be obtained of a quality and stability which is comparable with the product obtained with the device such as described in European Patent Application 51,833, whilst a better product is obtained than with the conventional Steinhall process. Also it is possible now to achieve a desired final product faster than via the conventional Steinhall process, because the mixing time can now be halved, or even further reduced compared to the mixing time such as is used in the Steinhall process.

The mixing vessel 1 has for example a capacity of 1500 l and can be stirred with the stirrer 3, which operates with a rotational speed of 1500 rotations per minute. The comparatively small mixing vessel 2 has a capacity of for example 2.5 l in that case, and the stirrer operates with a rotational speed of 3000 rotations per minute. By forcefully supplying, with a large capacity, the reaction mixture to the second vessel 2 having the relatively small capacity, by means of a pump 9, the effect of the reduction in the viscosity appears to be many times higher than is the case with processes wherein the second relatively small mixing vessel is not used. The effectivity of the stirring in the vessel 2 is much greater than in the vessel 1, therefore. With this device the carrier can be prepared after mixing for about 5 minutes, and after adding the remaining quantity of water, starch and borax to said carrier a final compound having the desired homogenity and viscosity can be obtained within 5 minutes.

The invention will be further explained with reference to the following examples.

### Example I.

In the examples a modified maize starch (mylbond BKF), a solution of caustic soda and borax as a solid substance were used.

For the preparation of the carrier 430 l of water, 43 kg of starch and 11 l of 30% NaOH solution are supplied to the mixing vessel 1. The temperature in the mixing vessel is kept at about 20 °C, and the stirrer in the mixing vessel 2 is set at 3600 revolutions per minute, whilst the mixture is circulated by means of the pump 9. The speed of the stirrer 3 in the mixing vessel 1 is 1500 rotations per minute. After stirring and circulating for 5 minutes the viscosity is 1200 m.Pa.s, which viscosity remains substantially constant, even after stirring for 20 minutes. To the carrier thus prepared there are added 680 l of water, 257 kg of starch and 2.5 kg of borax for the second step, and stirring and recirculating are continued.

After having stirred the entire mixture for 5 minutes the viscosity is 183.5 mPa.s and the temperature is 21.7 °C.

The analysis of the adhesive as a final product shows that it contains 3.3 % of NaOH, 1.9 g/l of borax and 300 kg of starch. The portative power, which is a value of the adhesiveness, is 30.

### Comparative example l

The process of example I was repeated, but when preparing the carrier the mixture was not recirculated through the mixing vessel 2. After 5 minutes the viscosity was still 8000 m.Pa.s and after 20 minutes it was still 3260 m.Pa.s. Said latter viscosity is relatively low because in the large mixing vessel only little starch is present for preparing an adhesive on the basis thereof. It is obvious, however, that after 5 minutes the viscosity of the carrier is too high to add the mixture for the second step to said carrier.

### Example II.

In this example the starting point was 350 l of water, to which 43 kg of starch and 11.0 l of 30% NaOH solution in water were added.

At a temperature of 20 °C and a rotational speed of 3000 rotations per minute in the vessel 2 a viscosity of 8800 m.Pa.s was reached after 5 minutes, and after 10 minutes a viscosity of 4960 m.Pa.s was reached. After 15 and 20 minutes the viscosity values were 3000 and 2350 m.Pa.s respectively.

Because it is aimed at to prepare the carrier within 5 minutes, with a viscosity of 4000 - 6000 m.Pa.s, this could be achieved by increasing the temperature to 40 °C, in which second experiment the viscosity after 5 minutes was 4550 m.Pa.s, and after 10, 15 and 20 minutes said viscosity was 3295, 2410 and 1860 m.Pa.s respectively.

To the carriers thus obtained there was added the second mixture of starting substances, viz. water, starch and borax, as indicated in example I, in order to obtain a desired final product.

### Example III.

To the mixing vessel there was added 387 l of water, 43 kg of starch and 11.0 l of 30% NaOH. The stirring conditions in the vessels 1 and 2 were set as indicated in example II. The temperature after 5 minutes was 37.4 °C and the viscosity of the carrier that was obtained was 4200 m.Pa.s.

After 5 minutes 650 l of water, 250 kg of starch and 3.5 kg of borax were added to the carrier thus obtained. After 5 minutes, at a temperature of 27.5 °C, a viscosity of 2280 m.Pa.s was measured, and after 10 minutes a viscosity of 562 m.Pa.s was measured. The adhesive that was eventually obtained, with an NaOH content of 3.5 g/l, was measured to have a portative power of 28.2.

## Claims

1. A process for preparing an adhesive for corrugated cardboard, which preparation is carried out in two steps, by preparing a carrier based on water, starch and lye in the first step, whereby the quantity of starch in the first step is less than the quantity of starch in the second step, and whereby a second mixture is added to the carrier in the second step, said second mixture consisting of the remaining quantity of starch, water and borax, characterized in that it is carried out batchwise, whereby at a temperature lower than 40 °C, in the first step the reaction mixture is added to a first relatively large mixing vessel provided with a stirrer, is led from the first mixing vessel to a second, smaller vessel in which the reaction mixture is subjected to a higher shearing stress than in the first mixing vessel, is then recirculated to the first mixing vessel and, after a predetermined viscosity of the carrier having a concentration of starch lower than 15%, calculated in relation to the weight of water plus starch, has been reached, the second mixture is added to the carrier and mixed with said carrier to a homogeneous mixture, whereby the starch granules added in the second step substantially do not gelatinize and, after mixing to a homogeneous mixture, the corrugated cardboard adhesive is discharged.

2. A process according to claim 1, characterized in that the quantity of starch in the carrier is 9-11%.

3. A process according to claims 1-2, characterized in that the viscosity of the carrier after 5 minutes is set at 4000-6000 m.Pa.s.

4. A device for carrying out the process according to claim 1, said device consisting of a mixing vessel having a stirrer, said mixing vessel being provided with supply lines for adding starting substances such as starch and water, and a discharge line for discharging an adhesive product, whereby the mixing vessel (1) is provided with a recirculation line (12), in which there is accommodated a second, comparatively smaller mixing vessel (2) provided with means for applying a shearing stress which is higher than the shearing stress applied in the first mixing vessel, characterized in that the mixing vessel (1) is also provided with supply lines for lye and borax.

5. A device according to claim 4, characterized in that the mixing vessel (2) is provided with a line (13) in which the mixture can be recirculated, whereby the mixing vessel (2) is short-circuited.

## Patentansprüche

1. Verfahren zum Herstellen eines Klebstoffes für Wellpappe, wobei das Verfahren in zwei Stufen ausgeführt wird durch Herstellen eines auf Wasser, Stärke und Lauge basierenden Trägers in der ersten Stufe, wobei die Menge der Stärke in der ersten Stufe geringer als die Menge der Stärke in der zweiten Stufe ist, und wobei ein zweites Gemisch dem Träger in der zweiten Stufe zugefügt wird, und das zweite Gemisch aus der verbleibenden Menge Stärke, Wasser und Borax besteht, dadurch gekennzeichnet, daß es chargenweise ausgeführt wird, wobei bei einer Temperatur von weniger als 40° C in der ersten Stufe das Reaktionsgemisch einem ersten, relativ großen Mischgefäß zugeführt wird, das mit einem Rührer ausgerüstet ist, aus dem ersten Mischgefäß in ein zweites, kleineres Gefäß überführt wird, in welchem das Reaktionsgemisch höheren Scherkräften als im ersten Mischgefäß unterworfen wird, sodann zum ersten Mischgefäß zurückgeführt wird und, sobald eine Viskosität des Trägers erreicht wurde mit einer Konzentration der Stärke von weniger als 15 %, berechnet in Bezug auf das Gewicht des Wassers plus der Stärke, das zweite Gemisch dem Träger zugeführt und mit dem Träger zu einem homogenen Gemisch vermischt wird, wobei die in der zweiten Stufe zugegebenen Stärkekörner nicht gelatinieren und, nach dem Mischen zu einem homogenen Gemisch der Wellpappenklebstoff abgegeben wird.

2. Verfahren nach Anspruch 1, dadurch gekennzeichnet, daß die Stärkemenge im Träger 9 bis 11 % beträgt.

3. Verfahren nach Anspruch 1 oder 2, dadurch gekennzeichnet, daß die Viskosität des Trägers nach 5 Min. auf 4 000 - 6 000 m.Pa.s. eingestellt wird.

4. Vorrichtung zum Durchführen des Verfahrens nach Anspruch 1, dadurch gekennzeichnet, daß die Vorrichtung aus einem Mischgefäß mit einem Rührer besteht, daß das Mischgefäß mit Zufuhrleitungen zum Zuführen von Ausgangssubstanzen wie Stärke und Wasser versehen ist, sowie mit einer Auslaßleitung zum Abgeben eines Klebstoffproduktes, wobei das Mischgefäß (1) mit einer Umwälzleitung (12) versehen ist, daß ein zweites, vergleichsweise kleineres Mischgefäß (2) vorgesehen ist, das mit Mitteln zum Aufbringen von Scherkräften ausgestattet ist, die größer als die Scherkräfte sind, die im ersten Mischgefäß angewandt werden, dadurch gekennzeichnet, daß das Mischgefäß (1) auch mit Zufuhrleitungen für Lauge und Borax versehen ist.

5. Vorrichtung nach Anspruch 4, dadurch gekennzeichnet, daß das Mischgefäß (2) mit einer Leitung (13) ausgerüstet ist, in welcher das Gemisch zurückgeführt werden kann, wodurch das Mischgefäß (2) kurzgeschlossen ist.

## Revendications

1. Procédé de préparation d'un adhésif pour carton ondulé, ladite préparation étant effectuée en deux opérations, par préparation d'un support à base d'eau, d'amidon et de lessive dans la première étape, où la quantité d'amidon dans la première étape est inférieure à la quantité d'amidon dans la deuxième étape, et où un deuxième mélange est ajouté au support dans la deuxième étape, ledit deuxième mélange étant constitué de la quantité restante d'amidon, d'eau et de borax, caractérisé par le fait qu'il est exécuté par lots, où à une température inférieure à 40°C, dans la première étape, le mélange de réaction est ajouté à un premier récipient de mélange relativement grand muni d'un agitateur, est acheminé du premier récipient de mélange à un deuxième récipient plus petit dans lequel le mélange de réaction est soumis à un effort de cisaillement plus élevé que dans le premier récipient de mélange, est alors remis en circulation vers le premier récipient de mélange et, après qu'a été atteinte une viscosité prédéterminée du support ayant une concentration d'amidon inférieure à 15% calculée par rapport au poids de l'eau plus l'amidon, le deuxième mélange est ajouté au support et mélangé avec ledit support en un mélange homogène, où les granules d'amidon ajoutées dans la deuxième étape ne se gélatinisent pas substantiellement et, après mélange en un mélange homogène, l'adhésif pour carton ondulé est déchargé.

2. Procédé selon revendication 1, caractérisé par le fait que la quantité d'amidon contenue dans le support est de 9-11%.

3. Procédé selon revendications 1-2, caractérisé par le fait que la viscosité du support après 5 minutes est fixée à 4000-6000 m.Pa.s.

4. Dispositif pour appliquer le procédé selon revendication 1, ledit dispositif comprenant un récipient de mélange ayant un agitateur, ledit récipient de mélange étant muni de canalisations d'alimentation pour l'adjonction des substances de démarrage, comme l'amidon et l'eau, et d'une canalisation de décharge pour décharger un produit adhésif, où le récipient de mélange (1) est muni d'une canalisation de recirculation (12) dans laquelle est prévu un deuxième récipient de mélange relativement plus petit (2) équipé de moyens d'application d'un effort de cisaillement qui est supérieur à l'effort de cisaillement appliqué dans le premier récipient de mélange, caractérisé par le fait que le récipient de mélange (1) est aussi muni de canalisations d'alimentation pour la lessive et le borax.

5. Dispositif selon revendication 4, caractérisé par le fait que le récipient de mélange (2) est muni d'une canalisation (13) dans laquelle le mélange peut être remis en circulation, où le récipient de mélange (2) est court-circuité.
